Europäisches Patentamt

European Patent Office

Office européen des brevets

(11) Veröffentlichungsnummer: **0 421 207 A2**

## (12) EUROPÄISCHE PATENTANMELDUNG

(21) Anmeldenummer: 90118162.8

(22) Anmeldetag: 21.09.90

(51) Int. Cl.5: **G11B 5/706**

(30) Priorität: 04.10.89 DE 3933184

(43) Veröffentlichungstag der Anmeldung:
10.04.91 Patentblatt 91/15

(84) Benannte Vertragsstaaten:
**DE FR GB NL**

(71) Anmelder: **Agfa-Gevaert AG**

**W-5090 Leverkusen 1(DE)**

(72) Erfinder: **Gerum, Johannes, Dr.**
**Robert-Koch-Strasse 38**
**W-8901 Stadtbergen(DE)**
Erfinder: **Kathrein, Hendrik, Dr.**
**Gürtelweg 4**
**W-4053 Jüchen-Aldenhoven(DE)**
Erfinder: **Wimbersky, Werner**
**Pilsenseestrasse 17**
**W-8000 Münchhen 70(DE)**
Erfinder: **van Bonn, Karl-Heinz, Dr.**
**Vinngrabenstrasse 44**
**W-4130 Moers(DE)**

(54) **Magnetischer Aufzeichnungsträger.**

(57) Ein magnetischer Aufzeichnungsträger mit hervorragenden Laufeigenschaften sowohl der Vorderseite wie auch der Rückseite bei Klimalagerung und bei häufigem Gebrauch wird erhalten, wenn das magnetische Pigment ein Co-dotiertes $FeO_x$-Pigment ist, welches mit einer Chromverbindung oberflächenbelegt ist. Als polymere Bindemittel werden bevorzugt Polyurethan und ein Vinylchloridcopolymerisat, als Fettsäure ein Gemisch aus Palmitinsäure und Stearinsäure eingesetzt.

EP 0 421 207 A2

## MAGNETISCHER AUFZEICHNUNGSTRÄGER

Die vorliegende Erfindung betrifft einen magnetischen Aufzeichnungsträger, bestehend aus einem unmagnetischen Schichtträger und einer darauf aufgebrachten Magnetschicht, die vorwiegend aus in einem polymeren Bindemittel fein verteilten magnetischen Pigmenten, nichtmagnetischen Zusatzstoffen und Fettsäuren besteht.

Es ist bereits bekannt, daß neben den speichertechnischen Eigenschaften eines magnetischen Aufzeichnungsträgers auch alle mechanischen Eigenschaften durch den Hauptbestandteil der Magnetschicht, nämlich das magnetische Pigment, maßgeblich beeinflußt werden.

So läßt sich durch sorgfältige Auswahl der Bindemittelkomponenten die Pigmenthaltekraft der feinverteilten Pigmentnadeln in der Bindemittelmatrix und damit das Abriebverhalten eines magnetischen Aufzeichnungsträgers vorteilhaft beeinflussen.

Durch Adsorptionsisothermen läßt sich die Adsorptionsneigung der Bindemittelkomponenten an der Pigmentoberfläche beschreiben. Quantitative Maßzahlen zur Beschreibung der Bindemittelaffinität an eine Pigmentoberfläche werden z. B. mittels Durchflußmikrokalorimetrie, im Reaktorkalorimeter, durch Bestimmung des Zetapotentials oder gravimetrisch durch Ruckwägung des nicht adsorbierten Anteils ermittelt.

Dabei werden nicht nur große Unterschiede von Pigmentklasse zu Pigmentklasse wie zum Beispiel zwischen $\gamma$-$Fe_2O_3$, bertholidischen Eisenoxid-Phasen zwischen Maghemit und Magnetit, $Fe_3O_4$, Co-Ferrit, $CrO_2$ oder Metallpulver gefunden, sondern bereits innerhalb einer Pigmentklasse soweit der Herstellungsablauf nicht vollständig identisch ist.

Unterschiedliches Adsorptionsverhalten der magnetischen Pigmente wirkt sich jedoch nicht nur auf die Bindemittelkomponente sondern gleichermaßen auf die niedermolekularen Rezepturbestandteile aus.

So muß insbesondere bei den zur Verbesserung des Laufverhaltens des magnetischen Aufzeichnungsträgers zugesetzten Fettsäuren darauf geachtet werden, daß sie nicht in Konkurrenzadsorption mit den adsorbierten Bindemittelkomponenten oder den eventuell zugesetzten Dispergierhilfsstoffen treten. Dadurch wird einmal die das Laufverhalten verbessernde Nirkung der Fettsäuren abgeschwächt und darüber hinaus durch Desorption von ungewünschten frei beweglichen niedermolekularen Bestandteilen in der Magnetschicht eine Blockneigung des magnetischen Aufzeichnungsträgers insbesondere unter feuchtwarmen Betriebsbedingungen erzeugt.

Darüber hinaus ist bekannt, daß die Oberfläche des magnetischen Pigmentes auch die Vernetzung der hochmolekularen Bindemittelkomponenten beeinflußt.

Folgende drei Falle sind zu unterscheiden:

A) Die durch Spuren freier Metallsalze katalysierte Isocyanatreaktion, die insbesondere an Polyurethanen die Verknüpfung der Polymerketten über Urethangruppenbildung beschleunigt und dabei den meist unerwünschten Aufbau eines Polyharnstoffgerüstes durch Reaktion der mehrfunktionellen Isocyanatkomponente mit in Spuren vorhandenem Wasser unterdrückt.

B) Ebenfalls durch Spuren von durch das magnetische Pigment eingeschleppten Metallsalzen wird eine Umurethanisierung der Polyurethanbindemittelkomponente katalysiert, wodurch eine Verbreiterung der Molekulargewichtsverteilung und damit eine nachteilige Beeinflussung der mechanischen Eigenschaften des magnetischen Aufzeichnungsträgers verbunden ist.

C) Weiter ist bekannt, daß insbesondere bei $CrO_2$-haltigen Magnetschichten eine unabhängig von einer eventuell parallel laufenden Isocyanatvernetzung insbesondere mit Vinylchloridcopolymerisaten als Bindemittelkomponente eine deutliche Verbesserung der mechanischen Schichteigenschaften erhalten wird.

Durch die gezielte Einstellung der Oberflächenchemie des magnetischen Pigmentes lassen sich somit Adsorption/Desorption der hoch- und niedermolekularen Rezepturkomponenten, die Zeitabhängigkeit des Gleitmittelhaushaltes, wie die physikalische und chemische Vernetzung der Bindemittelkomponenten beeinflussen.

So werden in JP 51-038094 zwar Co-, Cr- oder Mn-dotierte Berthollide beschrieben zur Verbesserung der magnetischen Stabilität und zur Erhöhung der Koerzitivkraft. Durch Körperdotierung des magnetischen Pigmentes mit den genannten Elementen reicht aber die Oberflächenkonzentration des Dotierungsmittels nicht aus, um eine ausreichende Verbesserung der Laufeigenschaften zu erzielen.

In der DE-DS 35 37 624 wird ebenfalls ein chromhaltiges magnetisches Pigment beschrieben, jedoch werden als Pigmente ausschließlich plättchenförmige Hexaferrite genannt, die ebenfalls die Dotierungskomponente gleichmäßig über das gesamte Pigmentteilchen verteilt enthalten; darüber hinaus verhalten sich derartige Pigmente in ihrem Adsorptionsverhalten gegenüber hoch- und niedermolekularen Komponenten völlig unterschiedlich zu den erfindungsgemäßen magnetischen Pigmentteilchen, welche vorzugsweise nadelförmig sind.

In der DE-OS 23 43 562 wird die Herstellung eines mit Co, Ni, Cr oder anderen Elementen körperdotierten Ferrites beschrieben, wobei merkliche Mengen Alkali oder Erdalkali in das magnetische Pigment eingebaut werden. Mit diesem Material hergestellte Schichten sind magnetomechanisch stabiler bei erhöhter Empfindlichkeit und Koerzitivkraft. Insbesondere die als Bindemittelkomponente eingesetzten Polyurethane werden in alkalischer Umgebung jedoch hydrolytisch gespalten, was bei längerer Lagerung des magnetischen Mediums zu einer Verschlechterung der Laufeigenschaften führt.

In der japanischen Anmeldung JP 326 693 (1988) wird die Nachbehandlung von Magnetpigmenten mit Hydriden der Elemente Ti; Zr, V, Mo, W, Ca, Ag, Al, Sn, Nb, Ta, Sb, Cr und Ni beschrieben, die eine Verbesserung von Br/Bs und OR und eine Senkung der Viskosität der magnetischen Dispersion bewirkt. Allerdings wird weder die Wirksamkeit von Ag, Nb, Ta und Cr durch Beispiele belegt, noch wird ein Verfahren zur Durchführung der Beschichtung mit diesen Elementen angegeben.

Im Gegensatz zu den in der obigen Anmeldung beschriebenen Verbesserungen liegt der vorliegenden Erfindung die Aufgabe zugrunde, einen magnetischen Aufzeichnungsträger mit verbesserten Laufeigenschaften ohne nachteilige Auswirkungen auf andere Qualitätsdaten, etwa die speichertechnische Empfindlichkeit, bereitzustellen.

Es wurde überraschenderweise gefunden, daß sich die Laufeigenschaften eines magnetischen Aufzeichnungsträgers insbesondere nach Klimalagerung oder Lagerung über längere Zeit deutlich verbessern, wenn als magnetisches Pigment ein Co-haltiges Eisenoxidpigment mit einer Oberflächenbelegung bestehend aus einer Chromverbindung eingesetzt wird. Die Herstellung der erfindungsgemäßen Eisenoxidpigmente ist in der LEA 27131 (Anmeldung der Bayer AG) beschrieben.

Dabei zeigte sich, daß es unerheblich ist, ob die erfindungsgemäße Oberflächenbelegung bei einem epitaxialen oder körperdotiertem Cobalteisenoxidpigment durchgeführt wird. Als wesentlich erwies sich dabei die Anwesenheit eines Vinylchloridcopolymerisates als Bindemittelkomponente, wobei eine Menge von 5 bis 15 Gew.-Teilen auf das magnetische Pigment bezogen als besonders geeignet gefunden wurde.

In Gegenwart von weniger als 5 Gew.-Teilen eines Vinylchloridcopolymerisates als Bindemittelkomponente konnte keine Verbesserung der Gleichmäßigkeit der dynamischen Gleitreibung und damit das Laufverhalten des magnetischen Aufzeichnungsträgers gefunden werden. Bei Anwesenheit von mehr als 15 Gew.-Teilen eines Vinylchloridcopolymerisates auf das magnetische Pigment bezogen wird die Magnetschicht spröde, was zu einem erhöhten Schichtabrieb im Dauerlauf führt.

Überraschenderweise wurde gefunden, daß sich eine Bindemittelmischung von 15 bis 25 Gew.-Teilen bestehend aus einem Vinyl chloridcopolymer und einem Polyurethan auf 100 Gew.-Teile des magnetischen Pigmentes bezogen auf das Laufverhalten des magnetischen Aufzeichnungstragers besonders vorteilhaft auswirkt. Senkt man den Bindemittelanteil unter 15 Gew.-Teile auf 100 Gew.-Teile des magnetischen Pigmentes bezogen ab, so erhöht sich die Abriebneigung des magnetischen Aufzeichnungsträgers stark. Bei Einsatz von mehr als 25 Gew.-Teilen des Bindemittels auf 100 Gew.-Teile des magnetischen Pigmentes bezogen kann die erforderliche Speichertechnik nicht mehr erreicht werden.

Das Mischungsverhältnis zwischen den Vinylchloridcopolymeren und dem Polyurethan als Bindemittelkomponente kann in einem weiten Bereich variiert werden, wobei mindestens 20 Gew.-Teile Vinylchlorid-Copolymerisat auf 100 Gew.-Teile des Gesamtbindemittels bezogen erforderlich sind, um den erfindungsgemäßen Effekt zu erzielen.

Darüber hinaus wurde gefunden, daß in Gegenwart des erfindungsgemäß mit einer Beschichtung einer Chromverbindung belegten Co-haltigen Eisenoxidpigments die Anwesenheit einer Fettsäuremischung in einer Menge von 0,5 bis 2,5 Gew.-Teile auf 100 Gew.-Teile des magnetischen Pigmentes bezogen, die Laufeigenschaften des magnetischen Mediums weiter verbessert. Bei einer Menge von unter 0,5 Gew.-Teilen des Fettsäuregemisches tritt keine Verbesserung der Laufeigenschaften auf, während bei einer Menge von mehr als 2,5 Gew.-Teilen auf 100 Gew.-Teile des magnetischen Pigmentes bezogen die Fettsäuremischung an der Magnetschichtoberfläche ausblüht, wodurch eine Belegung des Audio-, beziehungsweise des Videokopfes und damit eine Pegelabsenkung eintritt.

Im folgenden wird nun die im allgemeinen bekannte Herstellung des erfindungsgemäßen magnetischen Aufzeichnungsträgers beschrieben.

Das magnetische Pigment wird in einer geeigneten Menge Lösemittel, einer geeigneten Menge eines Dispergierhilfsmittels und einer Bindemittelmischung intensiv vermischt und einer Vordispergierung unterzogen, was zum Beispiel an einem Dissolver, einem Kneter, einer Kolloidmühle, einer Kugelmühle oder anderen hochscherenden Aggregaten durchgeführt werden kann.

Die Feindispergierung erfolgt nun beispielsweise in einer Perlmühle, deren Mahlintensität durch Variation der Mahlkörpergröße und -füllung, die Drehzahl und Lackdurchsatz gesteuert werden kann.

Um eine möglichst enge Pigmentverteilungsbreite zu erhalten wird vorzugsweise die magnetische Dispersion in mehreren Passagen von einem ersten Vorratsgefäß über eine oder mehrere beispielhaft genannte Perlmühlen in ein zweites Vorratsgefäß gefahren.

Nach Abschluß dieser Feindispergierstufe werden gegebenenfalls die restlichen Bindemittelanteile oder Additive der magnetischen Dispersion zugemischt.

Die anschließende Beschichtung des unmagnetischen Schichtträgers mit der Magnetdispersion erfolgt entsprechend dem Stand der Technik zum Beispiel mittels Reverse-Roll-Coater, Rasterdruck- oder Extrudergießer.

Als Schichtträger können Folien aus Polyester, wie Polyethylenterephthalat, Polyolefine, wie Polypropylen, Cellulosederivate wie Triacetat, Polycarbonate oder starre Schichtträger aus nichtmagnetischen Metallen wie Aluminium, oder keramische Materialien eingesetzt werden.

Die weitere Bearbeitung der beschichteten Materialien, wie die Oberflächenglättung durch Kalandern, Schneiden und Konfektionieren, erfolgt in bekannter Weise.

Um die Vorteile des erfindungsgemäßen Vorgehens zu belegen, werden folgende Eigenschaften eines auf 1/2" Breite getrennten Magnetbandes beschrieben.

1. Gleitreibung

Es wird die Schichtseite beziehungsweise die Rückseite des Prüfbandes über einen gereinigten Stahlstift der Oberflächenrauhigkeit $R_a$ = 0,04 μm reversierend insgesamt 100fach mit einem Bandzug von 50 p und einer Geschwindigkeit von 1,0 cm/s geführt und dabei die Zunahme der Reibungskraft gemessen.

2. Empfindlichkeit

Es wird auf einem VHS-Recorder (JVC 210) die Empfindlichkeit bei 5,0 MHz und 625 kHz gemessen; als Bezugsband dient ein interner Standard.

3. Dauerlauftest

Auf einem VHS-Recorder wird der Pegelabfall eines 5 MHz-Signales nach 100facher Wiedergabe gemessen.

Nachfolgend wird die Erfindung anhand von Beispielen näher erläutert. Einer speziellen Ausführungsform des erfindungsgemäßen, magnetischen Aufzeichnungsträgers liegt folgende Rezeptur zugrunde:

Beispiel 1

| Magnetisches Pigment | |
|---|---|
| (Co-Ferrit mit Beschichtung einer Chromverbindung und 17 % FeO-Gehalt; Koerzitivkraft: 52,5 kA/m; BET-Wert: 29 m²/g | 100 Gew.-Teile |
| Dispergator | |
| (Lecithin) | 5 Gew.-Teile |
| Bindemittel 1 | |
| (Vinylchloridvinylalkoholvinylacetat, $T_g$: +46 °C) | 7 Gew.-Teile |
| Bindemittel 2 | |
| (Polyurethan, $T_g$: -12 °C) | 14 Gew.-Teile |
| Fettsäuremischung | |
| (Palmitinsäure) | 0,5 Gew.-Teile |
| (Stearinsäure) | 0,5 Gew.-Teile |
| Lösemittel | |
| (Tetrahydrofuran) | 170 Gew.-Teile |
| (Methylisobutylketon) | 30 Gew.-Teile |

Aus diesen Rezepturinhaltsstoffen wird nach obigem Verfahren ein 1/2" breites Magnetband gefertigt und in Hinblick auf die Gleitreibung, die Videoempfindlichkeit und die Dauerlaufeignung geprüft.

Beispiel 2

Es wird wie in Beispiel 1 verfahren, jedoch wird als magnetisches Pigment ein Co-haltiges Eisenoxidpigment mit einer Oberflächenbelegung bestehend aus einer Chromverbindung ausgewählt mit einer Koerzitivkraft von 56,5 kA/m und einem BET-Wert von 29 m²/g.

Beispiel 3

Es wird wie in Beispiel 1 verfahren, jedoch wird eine Bindemittelmischung aus 14 Gew.-Teilen Vinylchloridcopolymerisat und 7 Gew.-Teilen Polyurethan auf 100 Gew.-Teile des magnetischen Pigmentes bezogen eingesetzt.

Beispiel 4

Es wird wie in Beispiel 1 verfahren, jedoch werden Bindemittel 1 wie Bindemittel 2 in 10,5 Gew.-Teilen und anstelle der Fettsäuremischung lediglich 1,0 Gew.-Teile reiner n-Stearinsäure auf 100 Gew.-Teile des magnetischen Pigmentes bezogen eingesetzt.

Beispiel 5

Es wird wie in Beispiel 1 verfahren, jedoch wird als magnetisches Pigment eine Mischung von 15 Gew.-Teilen Co-haltiges Eisenoxid mit einer Oberflächenbelegung bestehend aus einer Chromverbindung mit einer Koerzitivkraft von 56,5 kA/m und einem BET-Wert von 29 m²/g und 85 Gew.-Teilen $CrO_2$ mit einer

Koerzitivkraft von 50 kA/m und einem BET-Wert von 28 m²/g eingesetzt.

Vergleichsbeispiel 1

Es wird wie in Beispiel 1 verfahren, jedoch wird als magnetisches pigment ein Co-haltiges Eisenoxidpigment ohne Oberflächenbelegung einer Koerzitivkraft von 52,5 kA/m und einem BET-Wert von 29 m²/g eingesetzt.

Vergleichsbeispiel 2

Es wird wie in Beispiel 1 verfahren, jedoch wird als magnetisches Pigment ein Co-haltiges Eisenoxidpigment eingesetzt mit einem Cr(III)-Salz als Dotierungsmittel und ohne eine Oberflächenbelegung.

Vergleichsbeispiel 3

Es wird wie in Beispiel 1 verfahren, jedoch wird als magnetisches Pigment ein Co-haltiges Ferrit ohne Oberflächenbelegung und als Fettsäure lediglich n-Stearinsäure in einer Menge von 1,0 Gew.-Teilen auf 100 Gew.-Teile des magnetischen Pigmentes bezogen eingesetzt.

Vergleichsbeispiel 4

Es wird im wesentlichen wie in Beispiel 4 verfahren, jedoch wird als magnetisches Pigment $CrO_2$ - (Koerzitivkraft: 49,3 kA/m; BET-Wert 28 m²/g) und als Fettsäuremischung 0,7 Gew.-Teile einer 1 : 1-Mischung aus Palmitinsäure und Stearinsäure auf 100 Gew. -Teile des magnetischen Pigmentes bezogen eingesetzt.

Die Ergebnisse der Versuchsbeispiele sind in Tabelle 1 dargestellt.

| Beispiel | Gleitreibung der Magnetschicht | | Gleitreibung der Rückseite | | Empfindlichkeit | | Dauerlauftest |
|---|---|---|---|---|---|---|---|
| | 5. Durchlauf | 100. Durchlauf | 5. Durchlauf | 100. Durchlauf | 5 MHz | 625 kHz | |
| | - | - | - | - | dB | dB | |
| 1 | 0,21 | 0,24 | 0,17 | 0,18 | +2,0 | +3,5 | sehr gut |
| 2 | 0,23 | 0,25 | 0,19 | 0,20 | +2,5 | +2,5 | gut |
| 3 | 0,20 | 0,24 | 0,23 | 0,22 | +2,0 | +3,5 | gut |
| 4 | 0,19 | 0,23 | 0,20 | 0,19 | +2,5 | +3,5 | gut |
| 5 | 0,19 | 0,24 | 0,18 | 0,19 | +2,0 | +2,0 | gut |
| Vergleichsbeispiel 1 | 0,28 | 0,38 | 0,30 | blockt | +2,0 | +3,0 | mittel |
| Vergleichsbeispiel 2 | 0,33 | 0,40 | 0,36 | blockt | +1,0 | -0,5 | schlecht |
| Vergleichsbeispiel 3 | 0,30 | 0,39 | 0,25 | 0,45 | +2,5 | +3,0 | mittel |
| Vergleichsbeispiel 4 | 0,20 | 0,25 | 0,18 | 0,18 | +2,0 | +1,0 | gut |

**Ansprüche**

1. Magnetischer Aufzeichnungsträger bestehend aus einem unmagnetischen Schichtträger und einer darauf aufgebrachten Magnetschicht, die vorwiegend aus in einem polymeren Bindemittel fein verteilten magnetischen Pigmenten, nichtmagnetischen Zusatzstoffen und Fettsäuren besteht, dadurch gekennzeichnet, daß zumindest ein Teil des magnetischen Pigments ein Co-haltiges Eisenoxidpigment ist, welches mit einer Chromverbindung oberflächenbelegt ist.

2. Magnetischer Aufzeichnungsträger nach Anspruch 1, dadurch gekennzeichnet, daß das Co-haltige Pigment aus einem Eisenoxidkern und einer Co-Hülle besteht, auf welcher eine Oberflächenbelegung bestehend aus einer Chromverbindung aufgebracht ist.

3. Magnetischer Aufzeichnungsträger nach Anspruch 1, dadurch gekennzeichnet, daß das Co-haltige Pigment aus einem körperdotierten Eisenoxid besteht, auf welchem eine Oberflächenbelegung bestehend aus einer Chromverbindung aufgebracht ist.

4. Magnetischer Aufzeichnungsträger nach Anspruch 1, dadurch gekennzeichnet, daß das magnetische Pigment nadelförmiges $\gamma$-$Fe_2O_3$ ist, auf welches eine Oberflächenbelegung bestehend aus einer Chromverbindung aufgebracht ist.

5. Magnetischer Aufzeichnungsträger nach Anspruch 1, dadurch gekennzeichnet, daß zu einem der magnetischen Pigmente gemäß den Ansprüchen 2 bis 4 zusätzlich feinteilige $CrO_2$-Teilchen eingesetzt werden.

6. Magnetischer Aufzeichnungsträger nach Anspruch 1 - 5 dadurch gekennzeichnet, daß als Bindemittelbestandteil 5 bis 15 Gew.-Teile eines Vinylchloridcopolymerisats bezogen auf 100 Gew.-Teile magnetisches Pigment eingesetzt wird.

7. Magnetischer Aufzeichnungsträger nach Anspruch 1 - 6, dadurch gekennzeichnet, daß 15 bis 25 Gew.-Teile einer Bindemittelmischung eingesetzt wird, bestehend aus einem Vinylchloridcopolymerisat und einem Polyurethan im Mischungsverhältnis 2 : 8 bis 8 : 2 bezogen auf 100 Gew.-Teile magnetisches Pigment.

8. Magnetischer Aufzeichnungsträger nach Anspruch 1 - 7, dadurch gekennzeichnet, daß 0,5 bis 2,5 Gew.-Teile einer Fettsäuremischung mit 12 bis 20 C-Atomen in der Kohlenstoffkette auf 100 Gew.-Teile des magnetischen Pigmentes bezogen eingesetzt werden.

9. Magnetischer Aufzeichnungsträger nach Anspruch 1 - 8, dadurch gekennzeichnet, daß das Fettsäuregemisch bevorzugt aus Palmitinsäure und Stearinsäure mit einem Mischungsverhältnis von 3 : 7 bis 7 : 3 besteht.